# FASCICULE DE BREVET EUROPEEN

(11) **EP 0 560 645 B1**
(45) Date de publication et mention de la délivrance du brevet: **22.05.1996**
(21) Numéro de dépôt: 93400474.8
(22) Date de dépôt: 24.02.1993
(51) Int. Cl.: F16H 61/36, B60K 20/04

(54) **Dispositif de commande d'une boîte de vitesses, en particulier pour véhicule automobile**
Gangschalthebelvorrichtung, insbesondere für Kraftfahrzeuge
Speed-change gear box control device, especially for automotive vehicles

(30) Priorité: 09.03.1992 FR 9202787
(43) Date de publication de la demande: 15.09.1993
(73) Titulaire: AUTOMOBILES PEUGEOT, F-75116 Paris (FR); AUTOMOBILES CITROEN, F-92200 Neuilly sur Seine (FR)
(72) Inventeur: Martin, Olivier, F-78590 Noisy Le Roi (FR)
(74) Mandataire: Berger, Helmut

(56) Documents cités:
- US-A- 2 250 820
- US-A- 4 143 560
- US-A- 4 543 842
- PATENT ABSTRACTS OF JAPAN vol. 12, no. 109 (M-682)8 Avril 1988 & JP-A-62 238 120 ( CHOU SPRING CO LTD ) 19 Octobre 1987

## Description

L'invention concerne un dispositif de commande d'une boîte de vitesses, en particulier pour véhicule automobile.

Les dispositifs de commande du changement de vitesse dans un véhicule automobile sont généralement constitués par un levier de commande monté pivotant par l'intermédiaire d'une rotule dans un support fixe, autour de deux axes orthogonaux respectivement parallèles aux directions transversale et longitudinale du véhicule, ledit levier étant relié à deux organes (câbles, tiges ou barres) destinés à la transmission du mouvement de pivotement du levier aux organes de la boîte de vitesses. Ces deux mouvements de pivotement du levier doivent être totalement indépendants de façon à entraîner respectivement deux translations indépendantes des câbles respectivement dit de sélection et de passage, la sélection et le passage correspondant respectivement aux mouvements du levier suivant la direction transversale et suivant la direction longitudinale du véhicule.

On connaît par exemple, par le brevet US 4.143.560, un dispositif de commande du changement de vitesse d'un véhicule, dans lequel le mouvement de pivotement du levier suivant la direction transversale du véhicule est transmis au câble de sélection par l'intermédiaire d'un balancier, monté oscillant autour d'un axe parallèle à la direction longitudinale du véhicule, ledit balancier étant relié de façon pivotante par l'intermédiaire d'un levier de renvoi, au câble de sélection précité, et comportant une rainure destinée au passage du levier, dans laquelle le levier coulisse lors de son pivotement suivant la direction longitudinale du véhicule.

Or, si ce dispositif permet l'obtention de deux mouvements de translation indépendants des deux câbles, il s'avère d'une part, que celui-ci est particulièrement encombrant et que des frottements se produisent entre le bas du levier et l'ouverture du balancier lors du pivotement du levier suivant la direction longitudinale du véhicule correspondant au mouvement de passage, d'où il résulte un rendement moindre en passage et l'apparition d'une usure des pièces en contact pouvant conduire à l'apparition d'un jeu.

La présente invention résout ces problèmes et propose un dispositif de commande d'une boîte de vitesses en particulier pour véhicule automobile de conception simple, d'encombrement réduit et particulièrement fiable.

A cet effet la présente invention a pour objet un dispositif de commande d'une boîte de vitesses de véhicule, du genre dans lequel deux organes de transmission sont, à l'une de leurs extrémités, mobiles sensiblement parallèlement à une direction longitudinale du véhicule, et reliés à un levier de manoeuvre sensiblement perpendiculaire à cette direction et pivotant par l'intermédiaire d'une rotule dans un support fixé au véhicule, l'un des organes s'articulant sur une extrémité du levier de manoeuvre opposée à celle qui est manoeuvrée, tandis que l'autre organe est articulé sur l'un des bras d'un levier de renvoi qui pivote autour d'un axe fixe sensiblement parallèle au levier de manoeuvre en position de repos, et dont l'autre bras, sensiblement parallèle à la susdite direction, s'articule sur une extrémité libre d'un étrier comprenant deux branches chevauchant la rotule, ledit étrier pivotant autour d'un axe géométrique passant par le centre de la rotule et sensiblement parallèle à la direction précitée, caractérisé en ce que les deux branches de l'étrier sont supportées par un axe traversant coaxialement la rotule suivant une direction sensiblement perpendiculaire au levier de manoeuvre et à la susdite direction longitudinale, ledit axe traversant un siège de la rotule et un boîtier fixe les contenant, par des ouvertures allongées prévues dans le siège et le boîtier précités et s'étendant sensiblement parallèlement à ce levier de manoeuvre

Suivant une réalisation particulière, les ouvertures sont de forme oblongue.

Suivant une caractéristique particulière de l'invention, les organes de transmission sont des câbles.

Suivant une autre caractéristique, les deux branches de l'étrier sont fixées à l'axe et s'étendent de part et d'autre du boîtier sensiblement parallèlement à la direction longitudinale précitée, et l'extrémité libre précitée est constituée par une patte de l'étrier s'étendant parallèlement au levier de manoeuvre et reliée de façon pivotante par son extrémité libre à l'un des bras du levier de renvoi précité.

On notera que les câbles sont entourés d'une gaine, les deux gaines comportant chacune deux éléments d'arrêt formant butée, respectivement en appui contre un support solidaire du boîtier et sur le carter de la boîte de vitesses.

Mais d'autres avantages et caractéristiques de l'invention apparaîtront mieux dans la description détaillée qui suit et se réfère aux dessins annexés donnés uniquement à titre d'exemple et dans lesquels :

La figure 1 est une vue en perspective illustrant schématiquement le dispositif de commande d'une boîte de vitesses de l'invention.

La figure 2 est une vue partielle en coupe suivant II-II de la figure précédente.

La figure 3 est une vue partielle en coupe suivant III-III de la figure précédente.

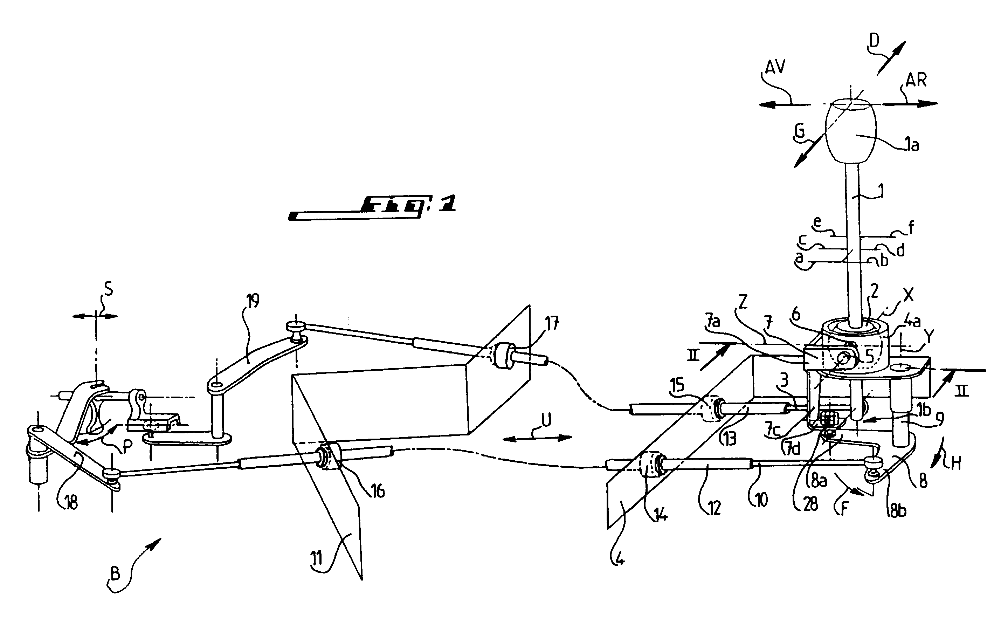

Sur la figure 1, on voit un dispositif de commande d'une boîte de vitesses de véhicule automobile (non représenté) conforme à une réalisation de l'invention, et se composant principalement d'un levier de commande 1 sensiblement vertical en position de repos, pourvu à l'une de ses extrémités d'une poignée la, relié de façon pivotante par son extrémité opposée 1b à un câble gainé 3 dit de passage, et monté pivotant en un point intermédiaire, autour d'un axe X parallèle à la direction transversale du véhicule. A cet effet le levier précité 1 est solidaire d'une rotule 2 montée dans le logement creux d'un siège 2a de la rotule 2 logé dans un boîtier 4a solidaire d'un support 4 fixé à la caisse du véhicule, ladite rotule 2 étant traversée par un axe 5 monté transversalement au véhicule entre les deux branches 7a, 7b d'un étrier 7, lesdites branches 7a, 7b s'étendant parallèlement à la direction longitudinale du véhicule. Cet étrier 7 comporte une patte 7c, s'étendant à partir de la partie de jonction des deux branches précitées 7a, 7b, en direction de l'extrémité non manoeuvrée du levier 1. Cette patte 7c est reliée de manière articulée à l'un 8a des deux bras 8a, 8b d'un levier de renvoi 8 monté articulé en 9 autour d'un axe Y parallèle à la direction du levier 1 en position de repos, l'autre 8b des deux bras 8a, 8b étant relié de manière articulée à un câble dit de sélection 10 relié par son extrémité libre à la boîte de vitesses B. Les deux câbles 10, 3 sont entourés respectivement de deux gaines 12, 13 comportant chacune deux éléments d'arrêt (14, 16) et (15, 17) ou butées, en appui respectivement sur le support précité 4 et sur le carter 11 de la boîte de vitesses B de façon à empêcher le déplacement relatif entre d'une part, les gaines précitées 12, 13 et d'autre part, le support 4 et le carter 11 précités. Ces deux câbles respectivement de passage 3 et de sélection 10 sont reliés de façon pivotante, comme ceci est connu en soi, respectivement à un levier de passage 19 et à un levier de sélection 18 de la boîte de vitesses B, de façon que le mouvement latéral du levier de commande 1 (tel que décrit à travers ce qui va suivre) vers l'une des trois positions latérales, commande la sélection d'un couple parmi trois couples de rapports constitués respectivement pour le premier, des première et seconde vitesses (a, b), pour le second, des troisième et quatrième vitesses (c, d) et pour le troisième, de la cinquième vitesse (e) et de la marche arrière (f) alors que le mouvement du levier 1 suivant la direction longitudinale (U) du véhicule détermine le choix entre les deux rapports du couple choisi.

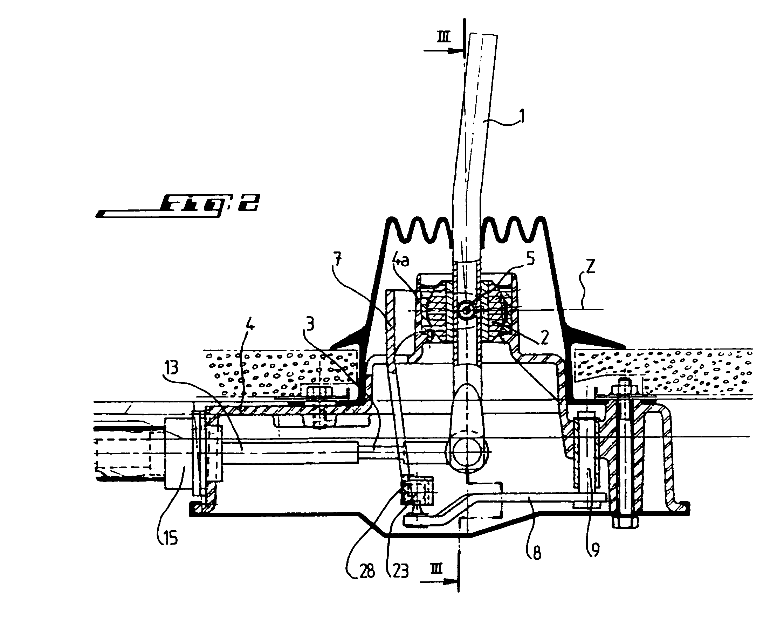

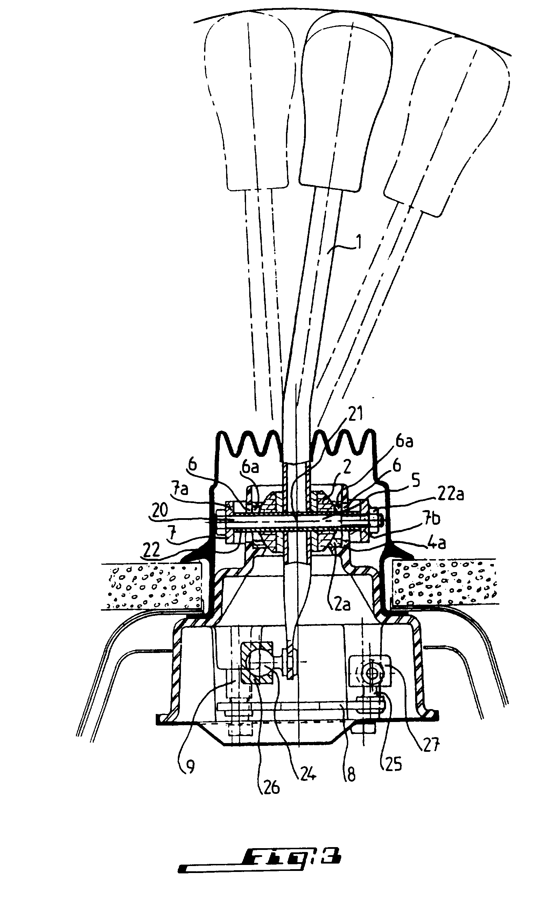

En se reportant plus particulièrement aux figures 2 et 3, on voit que l'axe précité 5 est constitué par une vis 20 dont la tige 21 est entourée d'un fourreau 22, traversant les deux branches 7a, 7b de l'étrier 7, le boîtier 4a, la rotule 2 et son siège 2a constitué de deux parties diamétralement opposées, ladite vis 20 étant vissée dans un écrou 22a de serrage réalisant la solidarisation de l'axe 5 et du fourreau 22 avec l'étrier 7.

Le pivotement du levier 1 suivant la direction transversale du véhicule est rendu possible grâce à des ouvertures 6, 6a de forme ablongue, s'étendant verticalement, ménagées de part et d'autre de la rotule 2 dans le boîtier 4a et le siège 2a de rotule 2, ces ouvertures 6, 6a permettant le débattement de l'axe 5 lors du pivotement du levier 1 entraînant dans un même mouvement le pivotement de l'étrier 7 autour d'un axe Z dit axe longitudinal de la rotule, orthogonal au premier axe précité X, et passant par le centre de la rotule 2. Ce pivotement de l'étrier 7 entraîne le pivotement du levier de renvoi 8 autour de son axe vertical Y en provoquant, selon le sens du déplacement du levier 1, une traction ou poussée sur le câble de sélection 10.

On voit également sur ces figures, que les liaisons articulées des câbles dit de sélection 10 et de passage 3 respectivement sur l'extrémité du levier de renvoi 8 et sur l'extrémité du levier de commande 1, sont réalisées pour chaque câble 3, 10, par l'intermédiaire d'une rotule 24, 25 solidaire du levier 1 ou 8 coopérant avec un embout creux 26 ou 27 coiffant la rotule 24, 25 et fixé au câble 3, 10. De la même manière, la liaison articulée entre l'extrémité coudée 7d de la patte de l'étrier 7 et l'arbre de renvoi 8 est réalisée par l'intermédiaire d'une rotule 23 coopérant avec une bague 28.

Le fonctionnement du dispositif de l'invention va être décrit brièvement à travers ce qui suit en se référant aux figures.

La commande du changement de vitesses s'effectue dans un premier temps, en faisant pivoter latéralement le levier de commande 1 vers la droite D ou la gauche G en fonction du choix du couple choisi (a, b), (c, d) ou (e, f). Ce mouvement du levier 1 entraîne le pivotement concomitant de l'étrier 7, autour de l'axe longitudinal précité Z de la rotule 2. L'étrier 7 entraîne alors le pivotement du levier de renvoi 8 suivant F, lors du pivotement du levier de commande 1 vers le côté droit, et suivant H lors du pivotement du levier du côté gauche. Ces deux mouvements entraînent respectivement une traction ou bien une poussée sur le câble de sélection 10 conduisant à un déplacement dans un sens ou dans l'autre suivant S du levier de sélection 18 relié aux organes de la boîte de vitesses. Dans un second temps, le levier de commande 1 est entraîné en rotation autour de l'axe 5 de l'étrier 7, vers l'avant ou l'arrière du véhicule, entraînant respectivement une traction ou une poussée sur le câble de passage 3 provoquant la rotation du levier de passage 19, de façon à effectuer par basculement suivant P le passage du rapport sélectionné parmi les deux rapports du couple choisi précédemment (a ou b, c ou d, e ou f). Ainsi, le pivotement du levier 1 vers l'avant AV permettra le passage, en fonction de la sélection choisie, des première, troisisème et cinquième vitesses, alors que le pivotement vers l'arrière AR permettra le passage des seconde et quatrième vitesses ainsi que de la marche arrière.

On a donc réalisé grâce à l'invention, un dispositif de commande d'une boîte de vitesses du véhicule de conception simple et d'encombrement réduit, lequel est particulièrement fiable et ne présente pas les inconvénients inhérents aux dispositifs connus entraînant notamment une diminution du rendement.

Bien entendu l'invention n'est pas limitée au mode de réalisation décrit et illustré qui n'a été donné qu'à titre d'exemple.

## Revendications

1. Dispositif de commande d'une boîte de vitesses (B) de véhicule, du genre dans lequel deux organes de transmission (3, 10) sont, à l'une de leurs extrémités, mobiles sensiblement parallèlement à une direction longitudinale (U) du véhicule, et reliés à un levier de manoeuvre (1) sensiblement perpendiculaire à cette direction (U) et pivotant par l'intermédiaire d'une rotule (2) dans un support (4) fixé au véhicule, l'un (3) des organes s'articulant sur une extrémité (16) du levier de manoeuvre opposée à celle (la) qui est manoeuvrée, tandis que l'autre organe (10) est articulé sur l'un (8b) des bras d'un levier de renvoi (8) qui pivote autour d'un axe fixe (9) sensiblement parallèle au levier de manoeuvre (1) en position de repos, et dont l'autre bras (8a), sensiblement parallèle à la susdite direction (U), s'articule sur une extrémité libre (7d) d'un étrier (7) comprenant deux branches (7a, 7b) chevauchant la rotule (2), ledit étrier (7) pivotant autour d'un axe géométrique (Z) passant par le centre de la rotule (2) et sensiblement parallèle à la direction précitée (U), caractérisé en ce que les deux branches (7a, 7b) de l'étrier (7) sont supportées par un axe (5) traversant coaxialement la rotule (2) suivant une direction (X) sensiblement perpendiculaire au levier de manoeuvre (1) et à la susdite direction longitudinale (U), ledit axe (5) traversant un siège (2a) de la rotule (2) et un boîtier fixe (4a) les contenant, par des ouvertures allongées (6, 6a) prévues dans le siège (2a) et le boîtier (4a) précités et s'étendant sensiblement parallèlement à ce levier de manoeuvre (1).

2. Dispositif selon la revendication 1, caractérisé en ce que les ouvertures (6, 6a) sont de forme oblongue.

3. Dispositif selon la revendication 1 ou 2, caractérisé en ce que les organes de transmission sont des câbles (3, 10).

4. Dispositif selon l'une quelconque des revendications précédentes, caractérisé en ce que les deux branches (7a, 7b) de l'étrier (7) sont fixées à l'axe (5) et s'étendent de part et d'autre du boîtier (4a), sensiblement parallèlement à la direction longitudinale précitée (U), et en ce que l'extrémité libre précitée (7d) est constituée par une patte (7c) de l'étrier (7) s'étendant parallèlement au levier (1) et reliée de façon pivotante, par son extrémité libre (7d), à l'un des bras (8a) du levier de renvoi précité (8).

5. Dispositif selon la revendication 3 ou 4, caractérisé en ce que les câbles (3, 10) sont entourés d'une gaine, les deux gaines (12, 13) comportant chacune deux éléments d'arrêt formant butée (14, 16) et (15, 17) respectivement en appui contre un support (4) solidaire du boîtier précité (4a) et sur le carter (11) de la boîte de vitesses (B).

## Patentansprüche

1. Vorrichtung zur Betätigung eines Gangschaltgetriebes (B) eines Fahrzeuges, derjenigen Gattung, bei welcher zwei Übertragungsglieder (3, 10) an einem ihrer Enden etwa parallel zu einer Längsrichtung (U) des Fahrzeuges bewegbar und mit einem etwa zu dieser Richtung (U) senkrechten und über ein Kugelgelenk (2) in einem an dem Fahrzeug befestigten Halter (4) schwenkbaren Schalthebel (1) verbunden sind, wobei das eine (3) der Glieder an einem (1b) Ende des Schalthebels, das demjenigen (1a), das betätigt wird, angelenkt ist, während das andere Glied (10) an einem (8b) der Arme eines Umlenkhebels (8), der um einen zum Schalthebel (1) in Ruhestellung etwa parallelen ortsfesten Zapfen (9) schwenkbar ist und dessen zur obengenannten Richtung (U) etwa parallele andere Arme (8a) an einem freien Ende (7d) eines zwei das Kugelgelenk (2) umgreifende Schenkel (7a, 7b) aufweisenden Bügels (7) angelenkt ist, wobei der besagte um eine durch den Mittelpunkt des Kugelgelenkes (2) führende und zu der vorgenannten Richtung (U) etwa parallele geometrische Achse (Z) schwenkbar ist, dadurch gekennzeichnet, dass die beiden Schenkel (7a, 7b) des Bügels (7) von einem das Kugelgelenk (2) in einer zum Schalthebel (1) und zu der vorgenannten Längsrichtung (U) senkrechten Richtung (X) das Kugelgelenk (2) koaxial durchsetzenden Stift (5) getragen werden, wobei der besagte Stift (5) einen Sitz (2a) des Kugelgelenkes (2) und ein diese enthaltendes ortsfestes Gehäuse (4a) durch in dem vorgenannten Sitz (2a) und Gehäuse (4a) vorgesehene Langlöcher (6, 6a) durchsetzt und sich etwa parallel zu diesem Schalthebel (1) erstreckt.

2. Vorrichtung nach Anspruch 1, dadurch gekennzeichnet, dass die Löcher (6, 6a) länglicher Gestalt sind.

3. Vorrichtung nach Anspruch 1 oder 2, dadurch gekennzeichnet, dass die Übertragungsglieder Drahtseile (3, 10) sind.

4. Vorrichtung nach irgendeinem der vorangehenden Ansprüche, dadurch gekennzeichnet, dass die beiden Schenkel (7a, 7b) des Bügels (7) an dem Stift (5) befestigt sind und sich etwa parallel zur vorgenannten Längsrichtung (U) beiderseits des Gehäuses (4a) erstrecken und dass das vorgenannte freie Ende (7d) durch einen sich parallel zum Schalthebel (1) erstreckenden und mit seinem freien Ende (7d) mit einem (8a) der Arme des vorgenannten Umlenkhebels (8) schwenkbar verbundenen Ansatzlappen (7c) des Bügels (7) gebildet wird.

5. Vorrichtung nach Anspruch 3 oder 4, dadurch gekennzeichnet, dass die Drahtseile (3, 10) durch einen Umhüllungsmantel umgeben sind, wobei die beiden Umhüllungsmäntel (12, 13) jeweils zwei einen Anschlag bildende Anhalteelemente (14, 16) und (15, 17) aufweisen, die sich jeweils an einem mit dem vorgenannten Gehäuse (4a) fest verbundenen und an dem Kasten (11) des Gangschaltgetriebes (B) abstützen.

## Claims

1. Device for the control of a speed-change gear box (B) of an automotive vehicle, of the kind in which two transmission members (3, 10) are, at one of their ends, movable in substantially parallel relation to a longitudinal direction (U) of the vehicle and connected to a shift lever (1) substantially perpendicular to this direction (U) and pivoting through the medium of a ball (2) in a support (4) fastened to the vehicle, one (3) of the members being pivoted onto one end (1b) of the shift lever opposite to that (la) which is actuated whereas the other member (10) is pivoted onto one (8b) of the arms of a bell-crank lever (8) which is pivoting about a stationary axis (9) substantially parallel to the shift lever (1) in the rest position and the other arm (8a) of which, substantially parallel to the above-said direction (U), is pivoted onto one free end (7d) of a yoke (7) comprising two legs (7a, 7b) straddling the ball (2), the said yoke (7) pivoting about one geometric axis (Z) passing through the centre of the ball (2) and substantially parallel to the aforesaid direction (U), characterized in that both legs (7a, 7b) of the yoke (7) are supported by a pin (5) coaxially extending through the ball (2) in a direction (X) substantially perpendicular to the shift lever (1) and to the above-said longitudinal direction (U), the said pin (5) extending through a seat (2a) of the ball (2) and a stationary casing (4a) containing them, through elongated openings (6, 6a) provided in the aforesaid seat (2a) and casing (4a) and extending in substantially parallel relation to this shift lever (1).

2. Device according to claim 1, characterized in that the openings (6, 6a) have an oblong shape.

3. Device according to claim 1 or 2, characterized in that the transmission members are cables (3, 10).

4. Device according to any one of the foregoing claims, characterized in that both legs (7a, 7b) of the yoke (7) are fastened to the pin (5) and extend on either side of the casing (4a) in substantially parallel relation to the aforesaid longitudinal direction (U) and in that the aforesaid free end (7d) is constituted by a lug (7c) of the yoke (7) extending in parallel relation to the lever (1) and connected in a pivoting manner with its free end (7d) to one of the arms (8a) of the aforesaid bell-crank lever (8).

5. Device according to claim 3 or 4, characterized in that the cables (3, 10) are surrounded by a sheath, both sheaths (12, 13) comprising each one two stop-like arresting elements (14, 16) and (15, 17) bearing upon a bracket (4) made fast to the aforesaid casing (4a) and upon the case (11) of the speed-change gear box (B).
